# EUROPÄISCHE PATENTANMELDUNG

(11) **EP 4 431 315 A1**
(43) Veröffentlichungstag der Anmeldung: **18.09.2024**
(21) Anmeldenummer: 23162095.6
(22) Anmeldetag: 15.03.2023
(51) Int. Cl.: B60D 1/64, H05B 47/20

(54) **SYSTEM ZUR ELEKTRISCHEN UND ELEKTRONISCHEN ANBINDUNG EINES ANHÄNGERS AN EIN FAHRZEUG**

(71) Anmelder: ConWys AG, 6023 Rothenburg (CH)
(72) Erfinder: WYSTRON, Alexander, 6005 Luzern (CH)
(74) Vertreter: Brinkmann & Partner

(57) **Zusammenfassung**

Die Erfindung betrifft ein System zur elektrischen und elektronischen Anbindung eines Anhängers an ein Fahrzeug, umfassend eine am Fahrzeug angeordnete und elektrisch mit einem Bordnetz des Fahrzeugs verbundene Steckdose (1) und einem am Anhänger angeordneten, zur Steckdose (1) kompatiblen und mit einem elektrischen Netz des Anhängers verbundenen Stecker (2), wobei in der Steckdose (1) und/oder im Stecker (2) eine Detektiereinrichtung (5) vorgesehen ist, die eine bestimmungsgemäße und exakte Positionierung des Steckers (2) in der Steckdose (1) detektiert, wobei eine Auswerteeinrichtung (6) vorgesehen ist, die ein Signal der Detektiereinrichtung (5) empfängt und hinsichtlich der bestimmungsgemäßen und exakten Positionierung des Steckers (2) in der Steckdose (1) auswertet und wobei ein Signalgeber (7) vorgesehen ist, der auf Basis der Auswertung ein Signal für eine Anzeigevorrichtung generiert.

## Beschreibung

Die Erfindung betrifft ein System zur elektrischen und elektronischen Anbindung eines Anhängers an ein Fahrzeug, umfassend eine am Fahrzeug angeordnete und elektrisch mit einem Bordnetz des Fahrzeugs verbundene Steckdose und einen am Anhänger angeordneten, zur Steckdose kompatiblen und mit einem elektrischen Netz des Anhängers verbundenen Stecker.

Derartige Systeme sind grundsätzlich aus dem Stand der Technik bekannt und dienen im Allgemeinen dazu, eine elektrische Anlage eines an einem Zugfahrzeug angekoppelten Anhängers oder Fahrradheckträgers in durch das Zugfahrzeug vorgebbarer Weise zu steuern. Dabei kann die elektrische Anlage des Anhängers oder des Fahrradheckträgers eine Mehrzahl unterschiedlicher elektrischer Komponenten umfassen. Derartige elektrische Komponenten betreffen insbesondere die Beleuchtung, d.h. beispielsweise die Rückleuchten, die Bremsleuchten und/oder dgl. Leuchten. Andere elektrische Komponenten, insbesondere eines Anhängers können ein Kühlschrank, eine Heizung und/oder dgl. elektrische Verbraucher sein, die ggf. mittels des Anhängeranschlussgerätes in vorgebbarer Weise angesteuert werden. Hierzu gehören beispielsweise auch elektrische Windenantriebe bei Bootstransportanhängern bzw. bei Fahrzeugtransportanhängern.

Für den bestimmungsgemäßen Anschluss eines Anhängers an ein Zugfahrzeug bedarf es zum einen einer mechanischen Verbindung sowie zum anderen einer elektrischen Verbindung. Die mechanische Verbindung erfolgt in der Regel über eine anhängerseitige Deichsel einerseits und einer zugfahrzeugseitigen Anhängerkupplung andererseits. Die elektrische Verbindung erfolgt durch eine steckbare Kabelverbindung. Es sind insbesondere das sogenannte Bordnetz auf der einen Seite und das sogenannte Anhängernetz auf der anderen Seite zu unterscheiden. Zwecks lösbarer elektrischer Verbindung ist zugfahrzeugseitig zumeist eine Steckdose vorgesehen, in die im bestimmungsgemäßen Verwendungsfall ein anhängerseitiger Stecker eines Anschlusskabels gesteckt ist. Typischerweise sind die Steckdosen und der Stecker 13-polig ausgeführt, es gibt aber auch 7-polige Varianten. Unterscheiden sich der anhängerseitige Stecker und die fahrzeugseitig montierte Anhängersteckdose hinsichtlich der unterschiedlichen Anzahl von Polen, so sind gängige Adapter bekannt, die sowohl eine 13-polige Steckdose mit einem 7-poligen anhängerseitigen Stecker oder umgekehrt miteinander verbinden.

Beispielsweise offenbart die DE 10 2014 003 672 A1 eine Steckkontakteinrichtung für eine Anhängerkupplung für ein Kraftfahrzeug, mit einer Anhänger-Kontaktanordnung, die elektrische Anschlusskontakte zur Herstellung einer elektrischen Verbindung mit einem Anhängerstecker eines an die Anhängerkupplung ankoppelbaren Anhängers aufweist, die mit einer elektrischen Fahrzeug-Schnittstelle elektrisch verbunden ist, wobei die Fahrzeug-Schnittstelle zur Verbindung mit einem Bordnetz des Kraftfahrzeugs eine Fahrzeug-Kontaktanordnung und/oder ein Anschlusskabel aufweist.

Grundsätzlich haben sich derartige Steckverbindungen bewährt. Dennoch sind hiermit verschiedene Probleme verbunden, wie beispielsweise nicht sichergestellt ist, dass beim Einstecken des Steckers in die Steckdose ausreichend sicher detektiert wird, dass sich der Stecker in der bestimmungsgemäßen und exakten Positionierung in der Steckdose befindet, um eine fehlerfreie Verbindung zu gewährleisten. Des Weiteren kann sich der Stecker während des Fahrbetriebs relativ zur Steckdose bewegen, so dass die bestimmungsgemäße und exakte Positionierung des Steckers in der Steckdose verlassen wird. In beiden Fällen besteht die Problematik, dass die elektrische und elektronische Anbindung des Anhängers an das Fahrzeug nicht mit der erforderlichen Exaktheit erfolgt, so dass durch eine beispielsweise mechanisch nicht exakte Verbindung zwischen Stecker und Steckdose elektrische und/oder elektronische Fehler entstehen können, die einen sicheren und/oder fehlerfreien Betrieb nicht gewährleisten.

Ausgehend von dem voranstehend genannten Stand der Technik und den damit verbundenen Nachteilen ist es **Aufgabe** der Erfindung, ein gattungsgemäßes System derart weiterzubilden, dass insbesondere die voranstehend dargestellten Nachteile vermieden werden können bzw. eine mechanische und/oder elektrische bzw. elektronische fehlerhafte Positionierung des Steckers in der Steckdose unmittelbar bei der Verbindung von Stecker und Steckdose bzw. auch bevorzugt während des Betriebs erkennbar ist.

Die **Lösung** dieser Aufgabenstellung sieht vor, dass in der Steckdose und/oder im Stecker eine Detektiereinrichtung vorgesehen ist, die eine bestimmungsgemäße und exakte Positionierung des Steckers in der Steckdose detektiert, wobei eine Auswerteeinrichtung vorgesehen ist, die ein Signal der Detektiereinrichtung empfängt und hinsichtlich der bestimmungsgemäßen und exakten Positionierung des Steckers in der Steckdose auswertet und wobei ein Signalgeber vorgesehen ist, der auf Basis der Auswertung ein Signal für eine Anzeigevorrichtung generiert.

Das erfindungsgemäße System weist somit ergänzend eine Detektiereinrichtung auf, die in der Steckdose, im Stecker oder auch in beiden Konstruktionselementen, nämlich Steckdose und Stecker angeordnet ist. Über diese Detektiereinrichtung wird die bestimmungsgemäße und exakte Positionierung des Steckers in der Steckdose detektiert. Demnach erzeugt die Detektiereinrichtung beispielsweise ein Signal, sobald der Stecker seine bestimmungsgemäße und exakte Positionierung in der Steckdose eingenommen hat. Dieses Signal wird von einer Auswerteeinrichtung empfangen und hinsichtlich der bestimmungsgemäßen und exakten Positionierung des Steckers in der Steckdose ausgewertet. Ergibt die Auswertung die bestimmungsgemäße und exakte Positionierung des Steckers in der Steckdose, wird das Signal an einen Signalgeber übermittelt, der auf Basis der Auswertung ein Signal für eine Anzeigevorrichtung generiert. Ein solches Signal für eine Anzeigeeinrichtung kann beispielsweise eine elektrische Energie, nämlich ein Einschaltstrom sein.

Vorzugsweise weist die Detektiereinrichtung einen Kontaktgeber auf, der mechanisch, elektrisch und/oder optoelektronisch ausgebildet ist. Im einfachsten Fall kann beispielsweise ein Mikroschalter verwendet werden, der innerhalb der Steckdose angeordnet ist und den der Stecker bei bestimmungsgemäßer und exakter Positionierung in der Steckdose erreicht und schaltet. Es sind aber auch elektrische Schalter möglich, wie beispielsweise kapazitive Widerstände oder dgl.. Ebenfalls besteht die Möglichkeit, optoelektronische Kontaktgeber vorzusehen, wie beispielsweise eine Lichtschranke, die bei einer Unterbrechung eines erzeugten Lichtstrahls das erforderliche Signal generiert und der Auswerteeinrichtung zuleitet.

Nach einer Weiterbildung des erfindungsgemäßen Systems ist vorgesehen, dass die Auswerteeinrichtung in einen Schaltungsaufbau zur Verbindung mit einem fahrzeugseitigen Daten-Bus-System und einer prozessorbasierten Steuerung von elektronischen Funktionen des Anhängers integriert ist.

Bei dem erfindungsgemäßen System und hier insbesondere bei einer 7-poligen Steckverbindung wird somit der Nachteil ausgeschlossen, dass die Verbindung allein durch einen Kraftaufwand getätigt wird, bei dem nicht ganz klar ist, wann die elektrische Verbindung vollständig und korrekt hergestellt ist.

Es ist nach einem weiteren Merkmal der Erfindung vorgesehen, dass die Anzeigevorrichtung als optische und/oder akustische Anzeigevorrichtung ausgebildet ist und/oder einen Sender zur drahtlosen Übertragung eines digitalen Signals an ein Mobilfunkgerät aufweist. Bei dieser Ausgestaltung kann im Falle der bestimmungsgemäßen und exakten Positionierung des Steckers in der Steckdose ein optisches Signal, beispielsweise ein Aufleuchten eines Leuchtmittels erzeugt werden. Alternativ oder ergänzend kann auch ein akustisches Signal erzeugt werden, so dass bei einer bestimmungsgemäßen und exakten Positionierung des Steckers in der Steckdose ein im Fahrzeug verbauter Schallgeber aktiviert wird. Alternativ und/oder ergänzend kann auch vorgesehen sein, dass bei Erreichen der bestimmungsgemäßen und exakten Positionierung des Steckers in der Steckdose ein Sender zur drahtlosen Übertragung eines digitalen Signals aktiviert wird, so dass das digitale Signal an ein Mobilfunkgerät, beispielsweise an ein Smart-Phone übermittelt wird, so dass die bestimmungsgemäße und exakte Positionierung des Steckers in der Steckdose auch mit einem solchen Smart-Phone überprüft werden kann. Dies hat im Übrigen auch den Vorteil, dass eine Veränderung der bestimmungsgemäßen und exakten Positionierung des Steckers in der Steckdose zeitgleich im Smart-Phone angezeigt werden kann. Es erfolgt somit eine sofortige Benachrichtigung des Fahrers eines mit einem Anhänger verbundenen Fahrzeugs, sollte sich hinsichtlich der bestimmungsgemäßen und exakten Positionierung des Steckers in der Steckdose eine Veränderung ergeben, die auch eine gefährliche Situation, beispielsweise im Beleuchtungsbereich des Anhängers verursachen kann.

Das akustische Signal kann hier beispielsweise ähnlich einer Ladestation eines mobilen Telefons ausgebildet sein, bei dem ein exakter Anschluss des Telefons an der Ladestation mit einem kurzen akustischen und/oder optisch wahrnehmbaren Signal, wie beispielsweise einem zeitbeschränkten Einschalten einer Lichtquelle und/oder eines Einblendens eines Icons in einem Display, dann auch den gesamten Zeitraum der exakten Verbindung angezeigt wird. Ebenso ist es im Umkehrschluss möglich, demnach beim Herausziehen des Steckers aus der Steckdose einen Signalton zu erzeugen und/oder über ein Lichtsignal anzuzeigen, dass die exakte Verbindung nicht mehr besteht.

Es ist gemäß einer Weiterbildung der Erfindung weiterhin vorgesehen, dass die optische Anzeigevorrichtung als Leuchtmittel, insbesondere als eine LED im Bereich der Steckdose und/oder dem Stecker und/oder einer optisch wahrnehmbaren Darstellung auf einem Bildschirm für die Darstellung von Fahrzeugzuständen des Fahrzeugs, Karten oder anderen Informationen für einen Fahrzeugführer ausgebildet ist. Demnach kann die optische Anzeigevorrichtung direkt im Bereich der Steckdose bzw. des Steckers vorgesehen sein, so dass schon unmittelbar bei der Herstellung der Steckverbindung für den Nutzer angezeigt wird, dass eine bestimmungsgemäße und exakte Positionierung des Steckers in der Steckdose erreicht ist. Ergänzend oder auch alternativ kann eine solche optische Anzeigevorrichtung auch im Innenbereich des Fahrzeugs, insbesondere beispielsweise im Bereich eines Armaturen- bzw. Instrumententrägers oder auch eines Bildschirms für ein Navigationsgerät vorgesehen sein, so dass auch während der Nutzung des Fahrzeugs eine Veränderung der bestimmungsgemäßen und exakten Positionierung des Steckers in der Steckdose detektiert und unmittelbar angezeigt werden kann. Ein solches Signal hilft dem Nutzer eines Fahrzeugs dahingehend, dass er nach Erhalt eines entsprechenden optischen Signals sein Fahrzeug anhält und zumindest die Positionierung des Steckers in der Steckdose prüft, um sicherzustellen, dass auch alle Beleuchtungseinrichtungen des Anhängers ausreichend mit elektrischer Energie versorgt werden und eine Gefährdung des Verkehrs durch fehlerhafte Lichtsignale vermieden wird.

Es ist alternativ, aber auch ergänzend nach einem weiteren Merkmal der Erfindung möglich, dass die akustische Anzeigevorrichtung als Schallgenerator im Bereich der Steckdose und/oder dem Stecker und/oder in einem Innenraum des Fahrzeugs ausgebildet ist. Neben einem optischen Signal kann hierdurch auch ein akustisches Signal generiert werden, welches die Aufmerksamkeit des Nutzers steigert und eine Reaktion der Überprüfung veranlasst.

Nach einem weiteren Merkmal der Erfindung ist vorgesehen, dass der Sender eine Bluetooth-Schnittstelle aufweist. Über diese Bluetooth-Schnittstelle können die Signale in einfacher Weise auf einen Bildschirm eines Smart-Phones übertragen werden. In gleicher Weise können auch Schallgeber des Smart-Phones angesteuert werden, wobei auch hier die Bluetooth-Schnittstelle genutzt werden kann.

Die Erfindung betrifft ferner ein Verfahren zum Betrieb eines Systems, wobei über eine Detektiereinrichtung eine bestimmungsgemäße und exakte Positionierung des anhängerseitigen Steckers in der fahrzeugseitigen Steckdose detektiert wird, ein Signal der Detektiereinrichtung generiert und an eine Auswerteinrichtung übertragen wird, die bei bestimmungsgemäßer und exakter Positionierung des Steckers in der Steckdose einen Signalgeber ansteuert, der auf Basis der Auswertung ein Signal für eine Anzeigevorrichtung generiert.

Weitere Merkmale und Vorteile der Erfindung ergeben sich aus der nachfolgenden Beschreibung der zugehörigen Zeichnung, in der eine bevorzugte Ausgestaltung eines Systems als Prinzip Skizze dargestellt ist.

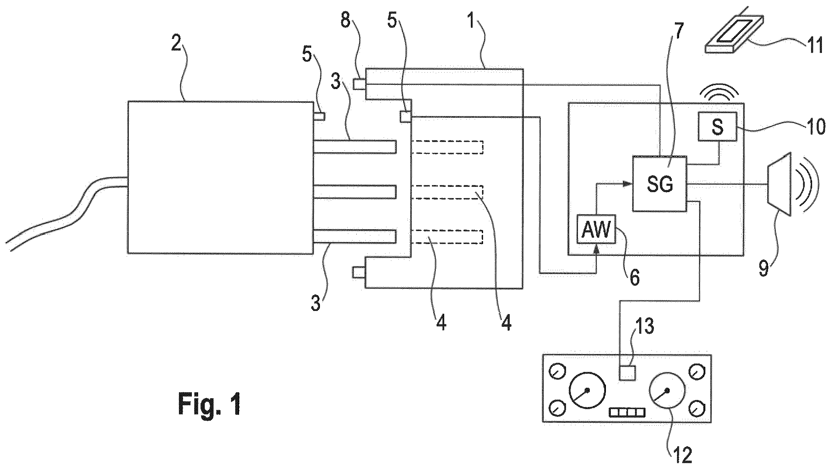

In der Zeichnung ist ein System zur elektrischen und elektronischen Anbindung eines Anhängers an ein Fahrzeug dargestellt, welches eine am Fahrzeug angeordnete und elektrisch mit einem Bordnetz des Fahrzeugs verbundene Steckdose 1 und einen am Anhänger angeordneten, zur Steckdose 1 kompatiblen und mit einem elektrischen Netz des Anhängers verbundenen Stecker 2 aufweist. Der Stecker 2 weist mehrere Polstifte 3 auf, die in korrespondierende Aufnahmen 4 in der Steckdose 1 einsteckbar sind, um eine elektrische Verbindung eines Bordnetzes des Fahrzeugs mit einem Anhängernetz bereitzustellen.

In der Steckdose 1 und/oder am Stecker 2 ist eine Detektiereinrichtung 5 angeordnet, die als Schaltelement ausgebildet ist, wobei zwei an der Steckdose 1 und am Stecker 2 angeordnete Kontakteinrichtungen der Detektiereinrichtung 5 bei bestimmungsgemäßer und exakter Positionierung des Steckers 2 in der Steckdose 1 miteinander in Kontakt treten und einen Schaltvorgang auslösen, über den ein Signal an eine Auswerteeinrichtung 6 übermittelt wird.

Die Auswerteeinrichtung 6 empfängt somit ein Signal der Detektiereinrichtung 5 und wertet dieses Signal hinsichtlich der bestimmungsgemäßen und exakten Positionierung des Steckers 2 in der Steckdose 1 aus. Führt diese Auswertung dazu, dass eine bestimmungsgemäße und exakte Positionierung des Steckers 2 in der Steckdose 1 detektiert wird, wird ein Signalgeber 7 über die Auswerteeinrichtung 6 aktiviert. Hierdurch generiert der Signalgeber 7 ein Signal für eine Anzeigevorrichtung.

Als Anzeigevorrichtung sind in der Zeichnung verschiedene Ausgestaltungen dargestellt. Zum einen kann es sich bei der Anzeigevorrichtung um ein Leuchtmittel 8 handeln, welches im Bereich der Steckdose 1 für den Nutzer gut sichtbar angeordnet ist und bei einer bestimmungsgemäßen und exakten Positionierung des Steckers 2 zwei in der Steckdose 1 aufleuchtet. Das Leuchtmittel 8 kann aus mehreren LED bestehen, die im Bereich einer Stirnfläche der Steckdose 1 gleichmäßig über den Umfang der Steckdose 1 verteilt angeordnet sind. Hierdurch ist das Leuchtmittel 8 aus verschiedenen Betrachtungsrichtungen gut und eindeutig ersichtlich und ferner führt die Mehrzahl der LED auch zu einem optischen Signal, wenn eine LED defekt ist.

Ebenfalls ist denkbar, dass das Leuchtmittel 8 am Steuergerät angeordnet ist. Das hat den Vorteil, dass weitere Signale mit dem gleichen Leuchtmittel 8 dargestellt werden können.

Das Aufleuchten des Leuchtmittels 8 kann zeitgesteuert auf ein bestimmtes Zeitintervall beschränkt sein, welches Zeitintervall einen Startpunkt aufweist, der mit dem Erreichen der bestimmungsgemäßen und exakten Positionierung des Steckers 2 in der Steckdose 1 übereinstimmt. Über den Signalgeber 7, der mit Erreichen des Startpunktes des Zeitintervalls eine bestimmte Intervalllänge vorgibt, wird ein Abschalten des Leuchtmittels 8 nach Ablauf des Zeitintervalls ausgeführt.

In gleicher Weise kann die Anzeigevorrichtung als Schallgenerator 9 ausgebildet sein. Hierbei kann es sich sowohl um einen Schallgenerator im Bereich der Steckdose 1 und/oder dem Stecker 2 oder um einen Schallgenerator in einem Innenraum des nicht näher dargestellten Fahrzeugs handeln. Bevorzugt kann es sich also auch um einen Signalgeber des Fahrzeugs handeln.

Als weitere Möglichkeit kann die Anzeigevorrichtung einen Sender 10 mit einer Bluetooth-Schnittstelle aufweisen, so dass über diese Schnittstelle eine Kommunikation mit einem Mobilfunkgerät 11, beispielsweise einem Smart-Phone ermöglicht wird.

Schließlich besteht die Möglichkeit, dass die Anzeigevorrichtung im Bereich eines Armaturen- bzw. Instrumententrägers 12 als Leuchtmittel 13 ausgebildet ist, wobei hierunter auch ein Display eines Navigationssystems zu verstehen ist.

Mit dem erfindungsgemäßen System besteht die Möglichkeit, über die Detektiereinrichtung 5 eine bestimmungsgemäße und exakte Positionierung des anhängerseitigen Steckers 2 in der fahrzeugseitigen Steckdose 1 zu detektieren, wodurch ein Signal der Detektiereinrichtung 5 generiert und an eine Auswerteeinrichtung 6 übertragen wird. Bei bestimmungsgemäßer und exakter Positionierung des Steckers 2 in der Steckdose 1 wird der Signalgeber 7 angesteuert, der auf Basis der Auswertung ein Signal für eine Anzeigevorrichtung generiert. Bei diesem generierten Signal kann es sich beispielsweise um einen elektrischen Impuls handeln.

### Bezugszeichen

- 1.: Steckdose
- 2.: Stecker
- 3.: Polstift
- 4.: Aufnahme
- 5.: Detektiereinrichtung
- 6.: Auswertevorrichtung
- 7.: Signalgeber
- 8.: Leuchtmittel
- 9.: Schallgenerator
- 10.: Sender
- 11.: Mobilfunkgerät
- 12.: Instrumententräger
- 13.: Leuchtmittel

## Patentansprüche

1. System zur elektrischen und elektronischen Anbindung eines Anhängers an ein Fahrzeug, umfassend eine am Fahrzeug angeordnete und elektrisch mit einem Bordnetz des Fahrzeugs verbundene Steckdose (1) und einem am Anhänger angeordneten, zur Steckdose (1) kompatiblen und mit einem elektrischen Netz des Anhängers verbundenen Stecker (2), wobei in der Steckdose (1) und/oder im Stecker (2) eine Detektiereinrichtung (5) vorgesehen ist, die eine bestimmungsgemäße und exakte Positionierung des Steckers (2) in der Steckdose (1) detektiert, wobei eine Auswerteeinrichtung (6) vorgesehen ist, die ein Signal der Detektiereinrichtung (5) empfängt und hinsichtlich der bestimmungsgemäßen und exakten Positionierung des Steckers (2) in der Steckdose (1) auswertet und wobei ein Signalgeber (7) vorgesehen ist, der auf Basis der Auswertung ein Signal für eine Anzeigevorrichtung generiert.

2. System nach Anspruch 1,
**dadurch gekennzeichnet,**
**dass** die Detektiereinrichtung (5) einen Kontaktgeber aufweist, der mechanisch, elektrisch und/oder optoelektronisch ausgebildet ist.

3. System nach Anspruch 1 oder 2,
**dadurch gekennzeichnet,**
**dass** die Auswerteeinrichtung (6) in einen Schaltungsaufbau zur Verbindung mit einem fahrzeugseitigen Daten-Bus-System und einer prozessorbasierten Steuerung von elektronischen Funktionen des Anhängers integriert ist.

4. System nach einem der vorhergehenden Ansprüche,
**dadurch gekennzeichnet,**
**dass** die Anzeigevorrichtung als optische und/oder akustische Anzeigevorrichtung ausgebildet ist und/oder einen Sender (10) zur drahtlosen Übertragung eines digitalen Signals an ein Mobilfunkgerät (11) aufweist.

5. System nach Anspruch 4,
**dadurch gekennzeichnet,**
**dass** die optische Anzeigevorrichtung als Leuchtmittel (8), insbesondere als eine LED im Bereich der Steckdose (1) und/oder dem Stecker (2) und/oder einer optisch wahrnehmbaren Darstellung auf einem Bildschirm für die Darstellung von Fahrzuständen des Fahrzeugs, Karten oder anderen Informationen für einen Fahrzeugführer ausgebildet ist.

6. System nach Anspruch 4,
**dadurch gekennzeichnet,**
**dass** die akustische Anzeigevorrichtung als Schallgenerator (9) im Bereich der Steckdose (1) und/oder dem Stecker (2) und/oder in einem Innenraum des Fahrzeugs ausgebildet ist.

7. System nach Anspruch 4,
**dadurch gekennzeichnet,**
**dass** der Sender (10) eine Bluetooth-Schnittstelle aufweist.

8. Verfahren zum Betrieb eines Systems nach einem der Ansprüche 1 bis 7,
**dadurch gekennzeichnet,**
**dass** über eine Detektiereinrichtung (5) eine bestimmungsgemäße und exakte Positionierung des anhängerseitigen Steckers (2) in der fahrzeugseitigen Steckdose (1) detektiert wird, ein Signal der Detektiereinrichtung (5) generiert und an eine Auswerteeinrichtung (6) übertragen wird, die bei bestimmungsgemäßer und exakter Positionierung des Steckers (2) in der Steckdose (1) einen Signalgeber (7) ansteuert, der auf Basis der Auswertung ein Signal für eine Anzeigevorrichtung generiert.
